# EUROPEAN PATENT APPLICATION

(11) **EP 2 237 589 A1**
(43) Date of publication of application: **06.10.2010**
(21) Application number: 09156918.6
(22) Date of filing: 31.03.2009
(51) Int. Cl.: H04W 16/14, H04W 72/08

(54) **A method for spectrum sharing between a primary device and a secondary device with minimum primary device receiver side effort**

(71) Applicant: NEC Corporation, Minato-ku Tokyo 108-8001 (JP)
(72) Inventor: Mouhouche, Belkacem, 91300 Massy (FR)
(74) Representative: Ilgart, Jean-Christophe

(57) **Abstract**

The invention relates to a semi cooperative method to share the spectrum between a primary device (2) and a secondary device (4) where the secondary device (4) makes every effort for adapting the receiver parameters for a better reception quality and the primary device (2) does the minimum effort that will allow the secondary device (4) to access the spectrum.

## Description

### TECHNICAL DOMAIN

The invention pertains to telecommunication field and concerns a method for sharing spectrum between a primary device and a secondary device, said primary device comprising a primary transmitter and a primary receiver, and said secondary device comprising a secondary transmitter and a secondary receiver, method in which the second device attempts to use the spectrum while the spectrum is already used by the first device.

### STATE OF PRIOR ART

Spectrum sharing is the idea that two or more secondary transmission/reception devices such as laptops and mobile communicating devices can access the spectrum of a primary device to meet the increase in radio spectrum resources demand.

Two main alternatives have been proposed for spectrum sharing:
► Using spectrum by the secondary devices when the primary device is not using it. This can be done either in a cooperative manner or by spectrum sensing from the secondary device.
► Using spectrum by the secondary device when the primary device is using it provided that the interference does not exceed a certain level.

Document WO 2007/000740 describes a method in which secondary devices try to access spectrum of a primary device when said spectrum is not used by the primary device. To do so, a statistical assessment of the percentage of time the spectrum is used by the primary device is done, and the secondary devices are allowed to use the spectrum during the idle mode of the primary device.

In this method, the secondary device can never access the spectrum if the primary device is using it.

The object of the invention is a semi cooperative method to share the spectrum between a primary device and a secondary device that allows the secondary device to access the spectrum of the primary device without affecting the QoS (Quality of service) of said primary device, even if said spectrum is being used by the primary device.

### PRESENTATION OF THE INVENTION

The object of the invention is achieved by means of a method for sharing spectrum between a primary device and a secondary device, said primary device comprising a primary transmitter and a primary receiver, and said secondary device comprising a secondary transmitter and a secondary receiver, wherein the second device tries to use the spectrum while it is already used by the first device.

The method according to the invention comprises:
- a measurement phase during which:
   - the primary transmitter sends first measurement sequences through a channel H11 and a channel H12 respectively to the primary receiver and to the secondary receiver, and the secondary transmitter sends second measurement sequences through a channel H21 and a channel H22 respectively to the primary receiver and to the secondary receiver,
   - the primary receiver estimates the channels H11, H21 and the secondary receiver estimate the channels H12 and H22,
   - the primary transmitter then determines either analytically or by a power control loop the maximum power that the secondary transmitter can transmit without affecting the quality of service of the primary receiver, and
- an An adjustment phase in which:
   - the secondary transmitter first uses the maximum power that the secondary receiver can tolerate without affecting the quality of service of the primary receiver, and
   - the primary receiver does the minimum effort in terms of adapting reception parameters to keep its QoS.

According to the invention, if even after using the maximum of its reception resources the primary receiver cannot keep its QoS, the primary device will recover the exclusive use of the spectrum.

According to a first variant of the invention, the secondary receiver adapts its parameters to increase the reception quality by passing from RAKE receiver to an equalizer receiver.

According to a second variant of the invention the secondary receiver adapts its parameters to increase the reception quality by increasing the number of reception branches.

According to a third variant of the invention the secondary receiver adapts its parameters to increase the reception quality by using a symbol-level receiver instead of a chip level receiver.

According to a fourth variant of the invention, the secondary receiver adapts its parameters to increase the reception quality by increasing the update rate of the equalizer or the receiver.

According to a fifth variant of the invention, the secondary receiver adapts its parameters to increase the reception quality by increasing the Minimum Mean Squared Error (MMSE) receiver rank. (Or equivalently the number of degrees of freedom for the receiver taps).

The invention also concerns a system for sharing spectrum between a primary device and a secondary device, said primary device comprising a primary transmitter and a primary receiver, and said secondary device comprising a secondary transmitter and a secondary receiver, said system comprises:
system for sharing spectrum between a primary device and a secondary device, said primary device comprising a primary transmitter and a primary receiver, and said secondary device comprising a secondary transmitter and a secondary receiver,
said system comprises:
   - means for estimating the transmission channels between the primary transmitter and the primary receiver and between the secondary transmitter and the secondary receiver,
   - means for configuring the secondary transmitter to use the the maximum power that the secondary receiver can tolerate without affecting the quality of service of the primary receiver if the secondary device attempts to use the spectrum when it is already used by the first device., and
   - means for configuring the primary receiver to do the minimum effort in terms of adapting reception parameters to keep its QoS.

### BRIEF DESCRIPTION OF THE FIGURES

The forgoing summary, as well as the following detailed description, will be better understood when read in conjunction with the appended figures illustrating an exemplary embodiment of the invention in which:
- figure 1 is schematic diagram illustrating the communication channels between primary device and a secondary device in a system according to the invention,
- figure 2 is a diagram illustrating the first step of the method according to the invention, in which the primary transmitter communicates with the primary receiver,
- figure 3 is a diagram illustrating the beginning of an adjustment phase in which the Secondary transmitter sends a request to Primary transmitter for using the primary device spectrum;
- figure 4 is a diagram illustrating the case where the secondary receiver does not achieve its quality of service by using all its reception possibilities.

### DESCRIPTION OF A DETAILED EMBODIMENT OF THE INVENTION

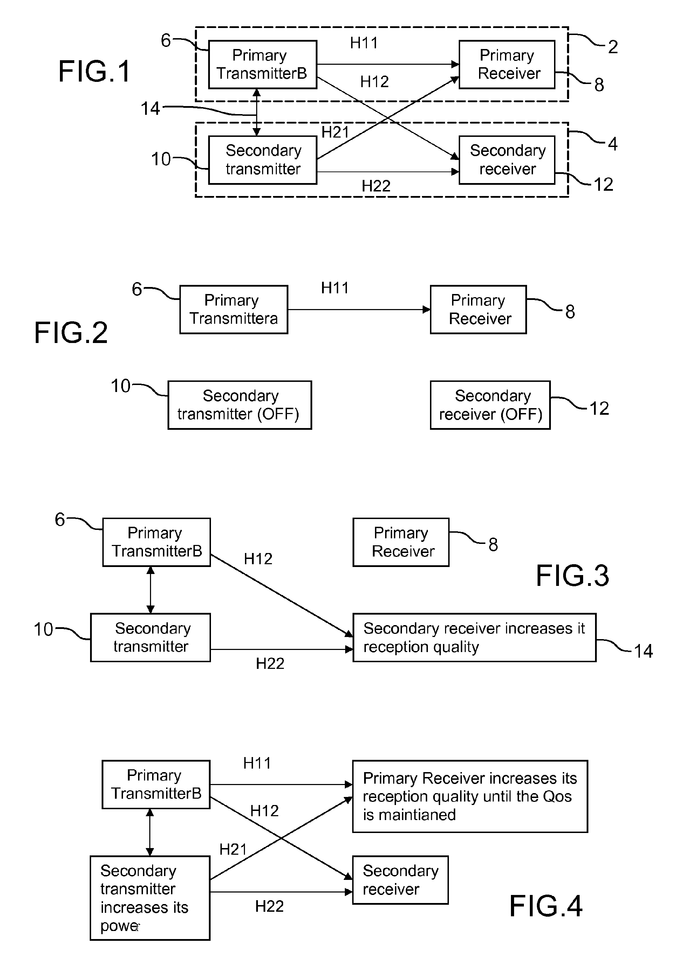

The invention will be described by reference to figures 1 to 4, illustrating the implementation of the method according to the invention in a system comprising a primary device 2 and a secondary device 4. The primary device 2 comprises a primary transmitter 6 communicating through a channel H11 with a primary receiver 8. The secondary device comprises a secondary transmitter communicating through a channel H22 with a secondary receiver 12.

The primary transmitter can communicate with the secondary receiver through a channel H12, and secondary transmitter can communicate with the primary receiver through a channel H21.

It is to be assumed that at the beginning only the primary Transmitter 6 is using the spectrum by communication with Primary receiver 8 as illustrated in figure 2.

When the secondary device 12 wants to access the spectrum, it sends a request to the primary transmitter 6 as illustrated in figure 3 by arrow 14.

An adjustment phase then begins during which the secondary transmitter 10 first uses the transmit power level tolerated by the secondary receiver 12 and the secondary receiver 12 tries its best to achieve the Quality of service using this power.

To do so, the secondary receiver 12 uses all its reception quality.

It may increase the number of antennas, the power consumption for example, or it may use a better advanced receiver, for example an equalizer or a symbol level receiver in case of CDMA, instead of a RAKE receiver. Or increase the receiver rank in case of an MMSE reduced-rank receiver.

As illustrated by figure 3, if the secondary receiver 12 does not achieve its quality of service by using all its reception possibilities, it sends a request to the secondary transmitter to increase the transmission power.

However, by increasing the transmission power, the secondary transmitter 10 creates a more-than-tolerable interference on the primary receiver (Link H21) and the primary receiver 8 increases its reception quality to maintain its quality of service.

If an equilibrium is reached, then communication between secondary transmitter 10 and secondary receiver 14 starts.

If on the other hand no satisfying equilibrium is reached (i.e. the primary device 2 couldn't maintain the QoS (quality of service) by using all of its reception capabilities), then the secondary device 4 stops transmitting and the primary device 2 recovers the exclusive use of the spectrum.

The method according to the invention may be applicable to Cognitive radio technology whatever the communication technologies used.

## Claims

1. A method for sharing spectrum between a primary device (2) and a secondary device (4), said primary device (2) comprising a primary transmitter (6) and a primary receiver(8), and said secondary device(4) comprising a secondary transmitter (10) and a secondary receiver (12), method in which the second device (4) tries to use the spectrum when said spectrum is already used by the first device (2), said method **characterized in that** it comprises:
• a measurement phase during which:
- the primary transmitter (6) sends first measurement sequences through a channel H11 and a channel H12 respectively to the primary receiver (8) and to the secondary receiver (12), and the secondary transmitter (10) sends second measurement sequences through a channel H21 and a channel H22 respectively to the primary receiver (8) and to the secondary receiver (12),
- the primary receiver (8) estimates the channels H11, H21 and the secondary receiver (12) estimate the channels H12 and H22,
- the primary transmitter (6) then determines either analytically or by a power control loop the maximum power that the secondary transmitter (10) can transmit without affecting the quality of service of the primary receiver (8), and
• an adjustment phase in which:
- the secondary transmitter (10) first uses the maximum power that the secondary receiver (12) can tolerate without affecting the quality of service of the primary receiver (8), and
- the primary receiver (8) does the minimum effort in terms of adapting reception parameters to keep its QoS.

2. Method according to claim 1 wherein, if even after using the maximum of its reception resources the primary receiver (8) cannot keep its QoS, the primary device (2) recovers the exclusive use of the spectrum.

3. Method according to claim 1 wherein the secondary receiver (12) adapts its parameters to increase the reception quality by passing from RAKE receiver to an equalizer receiver.

4. Method according to claim 1 wherein the secondary receiver (12) adapts its parameters to increase the reception quality by increasing the number of reception branches.

5. Method according to claim 1 wherein the secondary receiver (12) adapts its parameters to increase the reception quality by using a symbol-level receiver instead of a chip level receiver.

6. Method according to claim 1 wherein the secondary receiver (12) adapts its parameters to increase the reception quality by increasing the update rate of the equalizer or the receiver.

7. Method according to claim 1 wherein the secondary receiver (12) adapts its parameters to increase the reception quality by increasing the rank of the Minimum Mean Squared Error (MMSE) reduced-rank receiver.

8. System for sharing spectrum between a primary device (2) and a secondary device (4), said primary device (2) comprising a primary transmitter (6) and a primary receiver (8), and said secondary device (4) comprising a secondary transmitter (10) and a secondary receiver (12),
said system **characterized in** it comprises:
- means for estimating the transmission channels between the primary transmitter (6) and the primary receiver (8) and between the secondary transmitter (10) and the secondary receiver (12),
- means for configuring the secondary transmitter (10) to use the the maximum power that the secondary receiver (12) can tolerate without affecting the quality of service of the primary receiver (8) if the secondary device (4) attempts to use the spectrum when it is already used by the first device (2), and
- means for configuring the primary receiver (8) to do the minimum effort in terms of adapting reception parameters to keep its QoS.
